Europäisches Patentamt

European Patent Office

Office européen des brevets

(11) Veröffentlichungsnummer : **0 359 911 B1**

# (12) EUROPÄISCHE PATENTSCHRIFT

(45) Veröffentlichungstag der Patentschrift :
**31.08.94 Patentblatt 94/35**

(51) Int. Cl.$^5$ : **G01S 13/34,** G01S 7/35, G01S 7/40

(21) Anmeldenummer : **89110646.0**

(22) Anmeldetag : **13.06.89**

(54) **Radarhöhenmesser.**

(30) Priorität : **12.09.88 DE 3830992**

(43) Veröffentlichungstag der Anmeldung :
**28.03.90 Patentblatt 90/13**

(45) Bekanntmachung des Hinweises auf die
Patenterteilung :
**31.08.94 Patentblatt 94/35**

(84) Benannte Vertragsstaaten :
**FR GB IT SE**

(56) Entgegenhaltungen :
**GB-A- 1 589 047**
**GB-A- 2 055 001**
**US-A- 3 588 899**
**US-A- 4 245 221**
**US-A- 4 427 981**
**US-A- 4 435 708**

(56) Entgegenhaltungen :
**US-A- 4 435 712**
**IEEE 1988 MICROWAVE AND MILLIMETER-WAVE MONOLITHIC CIRCUITS SYMPOSIUM,**
**NewYork, 24.-25. Mai 1988, DIGEST OF PAPERS, Seiten 109-111, IEEE Publication**
**88CH2591-6; R. LEBLANC et al.: "GaAs monolithic circuit for FMCW radars"**

(73) Patentinhaber : **Deutsche Aerospace AG**
**D-81663 München (DE)**

(72) Erfinder : **Trummer, Günther**
**Breslauer Strasse 33**
**D-8523 Baiersdorf (DE)**
Erfinder : **Körber, Richard**
**Feldstrasse 8**
**D-8011 Putzbrunn (DE)**
Erfinder : **Mehltretter, Ludwig**
**Frühlingsstrasse 20**
**D-8012 Riemerling (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 359 911 B1

## Beschreibung

Die Erfindung bezieht sich auf einen Radarhöhenmesser der nach dem FMCW-Prinzip aufgebaut ist und im C-Band arbeitet.

Solche Höhenmesser sind beispielsweise aus "Funksysteme für Ortung und Navigation", v. Kramer bekanntgeworden und werden durch verschiedene Firmen - beispielsweise durch AEG, Honeywell etc. - vertrieben. Die verschiedenen Ausführungsformen solcher bekannter Höhenmesser sind aber mit einer Reihe von Nachteilen behaftet, insbesondere durch große Abmessungen, hohen Stromverbrauch und hohes Gewicht aufgrund der analogen Signalverarbeitung. Aber gerade die analoge Signalverarbeitung im Dauerbetrieb mit höhenabhängiger Regelung der Modulationsfrequenz ist schon auf große Entfernung sowohl in der Existenz als auch in der Höhe leicht detektierbar. Viele Geräte weisen eine mangelnde ECM-Festigkeit auf und liefern verfälschte Höhenmessungen in bewaldeten Gebieten, da die analoge Signalverarbeitung die Baumwipfel trackt.

Der vorliegenden Erfindung liegt die Aufgabe zugrunde, einen Radarhöhenmesser der eingangs genannten Art zu schaffen, der die Nachteile des Standes der Technik nicht mehr aufweist - also in Größe, Umfang und Gewicht minimiert ist und nicht mehr, oder nur schwer, detektierbar ist und zusätzlich Falschziele diskriminieren, sowie sich selbst gegen Zerstörung schützen kann.

Diese Aufgabe wird durch die im Anspruch 1 aufgeführten Maßnahmen gelöst. In den Unteransprüchen sind Ausgestaltungen und Weiterbildungen angegeben und in der nachfolgenden Beschreibung sowie in den Figuren der Zeichnung ist ein Ausführungsbeispiel erläutert. Es zeigen :

Fig. 1     ein Blockschaltbild des Höhenmessers mit seinen wesentlichen Baugruppen in schematischer Darstellung,

Fig. 2     ein Frequenz/Zeit-Diagramm einer vorgeschlagenen Wellenform für den Operationsmode,

Fig. 3     ein Blockschaltbild der Bauelemente zur Höhenbestimmung.

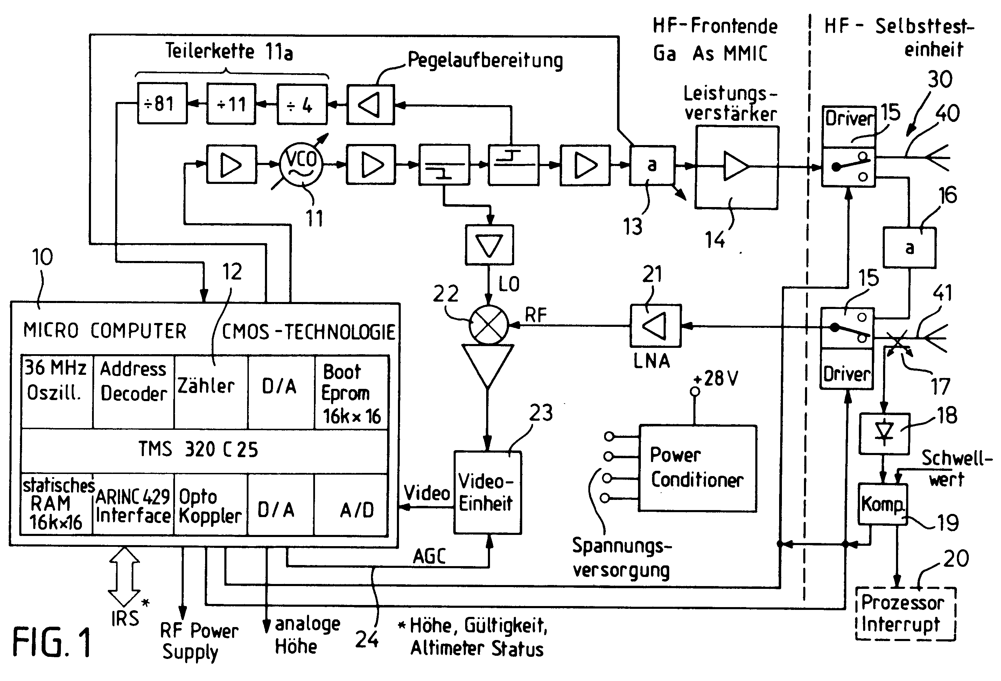

Die Figur 1 zeigt in einem Blockschaltbild den wesentlichen Aufbau eines nach der Erfindung konzipierten Ausführungsbeispiels für einen Radarhöhenmesser, wobei durch die Verwendung von GaAs MMIC's eine überdurchschnittlich hohe Integrationsstufe erzielt wird. Außerdem ist eine ausschließlich digitale Signalverarbeitung durch Einsatz der CMOS-Technologie ermöglicht worden. Der in der Figur dargestellte VCO 11 wird in der Sendefrequenz sägezahnförmig vom Mikrocomputer 10 nach dem FMCW-Prinzip moduliert. Aus dem dargestellten Sendezweig wird zum einen Energie für den Lokaloszillator LO des Mischers 22 und zum anderen Energie zur Messung der aktuellen Sendefrequenz ausgekoppelt. Diese Messung der aktuellen Sendefrequenz erfolgt über eine sogenannte Teilerkette 11a, die aus den Frequenzteilern -4, -11, -81 gebildet wird. Die Frequenz wird so bis auf ca. 1MHz heruntergeteilt und einem Zähler 12 im Mikrocomputer 10 zugeführt. In einer Tabelle wird der aktuelle Zählerstand mit den dort abgespeicherten Werten verglichen. Der gefundene Tabellenwert korrespondiert nun direkt mit der Startadresse der Frequenzrampe des VCO 11. Da abwechselnd die untere bzw. obere Sendefrequenz der Rampe ausgezählt wird ist es möglich auch den Frequenzhub zu kontrollieren bzw. zu regeln.

Durch dieses Verfahren wird mit geringem Aufwand die Linearisierung und Stabilisierung des VCO ermöglicht. Dadurch werden die bisher erforderlichen aufwendigen und störanfälligen PLL-Schaltungen oder die mit Harmonischen beaufschlagten "Downconvertereinheiten" hinfällig. Diese vorbeschriebene Regelschleife besitzt außerdem noch den Vorteil, daß sie selbstjustierend ist. Die Tabelle "gemessene Frequenz / zugehöriger Spannungswert der VCO-Rampe" wird vom Rechner des Mikrocomputer 10 automatisch in einem Eichzyklus erstellt. Damit werden Alterungseffekte wie sie bei langjähriger Lagerung auftreten ausgeglichen.

Der Sendezweig wird höhenabhängig in der Leistung reguliert. Hierzu ist ein variables Dämpfungsglied 13 dem Leistungsverstärker 14 vorgeschaltet, d. h. der Mikrocomputer 10 stellt aus der ermittelten Flughöhe den entsprechenden Leistungspegel über das Dämpfungsglied 13 ein. Dem Leistungsverstärker 14 folgt die integrierte Selbsttesteinheit 30, die sich aus zwei MMIC-Schalter 15 kurzer Schaltzeit - typisch 2 nsec - und einem Dämpfungsglied 16 konstanter Dämpfung zusammensetzt. Diese Anordnung erfüllt in den verschiedenen Betriebsmoden unterschiedliche Funktionen, wie nachfolgend erläutert wird :

Im Selbsttestmode sendet der VCO 11 bei einer Festfrequenz, der durch hochfrequentes Schalten des Schalters 15 im Empfangszweig die Schaltfrequenz überlagert wird. Diese Schaltfrequenz erscheint dann in der digitalen Auswerteinheit des Mikrocomputers 10 als simulierte Höhe. Damit ist es nun möglich, alle auftretenden Entfernungen durch Variation der Schaltfrequenz zu simulieren. Dies ist sowohl mit Antennen durch Überkopplung zwischen Sende40 und Empfangsantenne 41 als auch über das Dämpfungsglied (16) der Selbsttesteinrichtung 30 möglich. Im ersten Fall steht der Schalter 15 des Sendezweiges auf Antenne 40, im zweiten Fall steht der Schalter 15 des Sendezweiges auf Dämpfungsglied 16.

Der erste Fall ist wichtig bei Servicearbeiten am Flughafen, da er den Test des Gerätes einschließlich der Antennen ermöglicht. Der zweite Fall ist besonders bei militärischem Gerät - beispielsweise Tragflug von Dis-

2

pensersystemen - wichtig, da der Selbsttest ohne HF-Abstrahlung erfolgt und damit eine Detektierbarkeit durch Fremdsensoren nicht möglich ist.

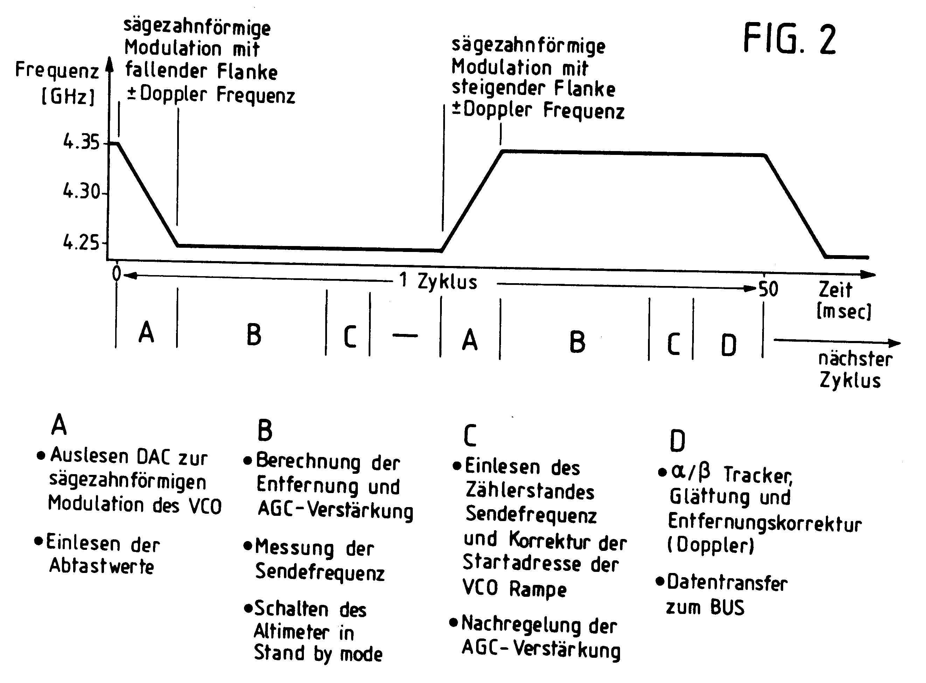

Im operationellen Betrieb - also im Operationsmode - wird die "Waveform" wie in Figur 2 dargestellt gesendet. Dabei stehen die Schalter 15 der Selbsttesteinheit 30 nur während der relativ kurzen Meßphase - ca. 1msec - auf Antennenbetrieb. In der Auswertphase des Meßsignals - ca. 18 msec - schaltet die Selbsttesteinheit 30 auf das Dämpfungsglied 16 als Signalpfad um und strahlt dabei fast keine HF-Energie mehr ab (-16 dBm). Wie bereits ausgeführt, wird durch die Detektierbarkeit des Radarhöhenmessers reduziert.

Der vorgeschlagene Radarhöhenmesser kennt zusätzlich auch noch einen sogenannten ECCM-Mode. Bei diesem wird über einen Koppler 17, der bevorzugt im Empfangszweig integriert ist, ständig ein Teil der empfangenen HF-Leistung über eine Detektordiode 18 gemessen. Die von dieser Detektordiode 18 abgegebene Gleichspannung wird mit einer vorgegebenen Schwellwertspannung verglichen. Die Schwellwertspannung ist so gewählt, daß bei Überschreitung um x% der Empfänger durchbrennen würde.

Befindet sich nun das Gerät in einem Gebiet hoher HF-Einstrahlung durch einen "Jammer", d.h. wird die Schwellwertspannung überschritten, dann schaltet das Gerät automatisch in den Stand-by-Mode - Selbsttestmode ohne Modulation des Schalters im Empfangszweig - um. Dadurch werden die Schalter 15 an ihrem Ausgang reflektiv, d.h. die einfallende Energie wird reflektiert und das Gerät ist vor Zerstörung geschützt. Gleichzeitig wird im Digitalteil des Prozessors 20 eine Unterbrechung (Interrupt) ausgelöst und der Prozessor arbeitet eine "Warteschleife" ab. In dieser Warteschleife wird ständig der "FLAG-Status" abgefragt. Unterschreitet die "Jammer-Hf-Leistung" den Schwellwert wieder, so wird das "FLAG" gesetzt und der Prozessor 20 schaltet den Höhenmesser wieder in den operationellen Betrieb zurück.

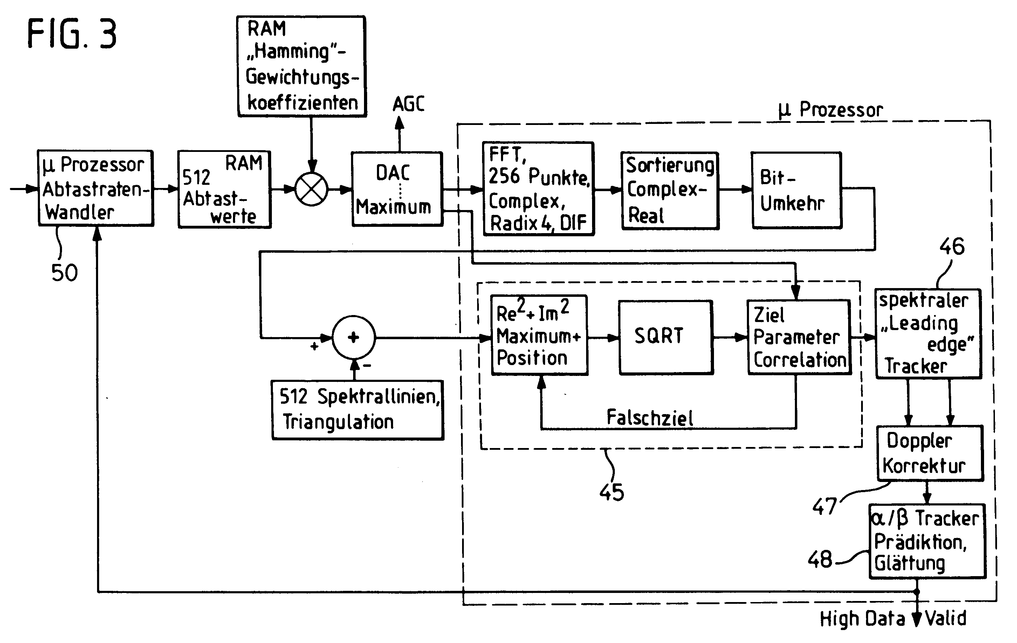

Im Empfangszweig ist ein sogenannter "Low-noise-amplifier" 21 zur Verbesserung der Rauschzahl angeordnet und zwar bevor das Empfangssignal am Mischer 22 in den Videobereich (Homodyn-Betrieb) herabgemischt wird. Der Videobereich 23 gliedert sich in die Pegelaufbereitung mit rechnergesteuerter AGC zum Ausgleich von Reflexionsunterschieden und einer "Antialiaising"-Tiefpaßfilterung. Das Videosignal wird dann entsprechend dem sogenannten "Nyquistkriterium" mindestens jedoch mit einem Faktor 2,5 in der Frequenz abgetastet. Das Modul zur Höhenbestimmung ist in der Fig. 3 dargestellt.

Wie bereits ausgeführt, wird die Abtastfrequenz prozessorgesteuert. Weiterhin stellt der Mikrocomputer über die Tabelle des Sägezahngenerators den Hub und die Modulationsfrequenz des Höhenmessers ein. Damit ist es nun möglich Höhenfenster mit abnehmender Genauigkeit oder über einen "sampling rate converter" 50 Höhenfenster mit gleicher Genauigkeit zu erzielen. Im ersten Fall wird der Hub mit der Entfernung entsprechend der Formel :

Zwischenfrequenz = 2 x Höhe x Modulationsfrequenz x Frequenzhub geteilt durch die Lichtgeschwindigkeit kleiner.

Im Zeitsignal wird das Maximum bestimmt und entsprechend für das nächstfolgende Meßintervall die AGC 24 ausgesteuert. Das Spektrum wird dann über eine schnelle Fourier-Transformation errechnet. Spektrale Überlagerungen , die durch eine mangelnde Isolation des Mischers 22 zwischen Lokaloszillatoreingangs LO und RF-Eingang und die endliche Antennenentkopplung zwischen Sende- 40 und Empfangsantenne 41 auftreten, werden vom gemessenen Spektrum subtrahiert. Hierzu wird vorher jedoch ein Eichzyklus durchgeführt und die Werte im Speicher des Mikrocomputers 10 abgelegt. Anschließend werden hierzu spektrale Manipulationen zur Falschzielunterdrückung durchgeführt. Unter Falschzielen werden beispielsweise Baumwipfel in bewaldeten Flächen verstanden oder vom Flugzeug abgefeuerte Munition, Dispenser oder sonstige Flugkörper usw. Die Entfernung zu Falschzielen wird durch die Auswertung von deren spektralen Eigenschaften, nämlich Spektrallinien mit hoher Amplitude und geringer Bandbreite, unterdrückt und zwar im Vergleich zu den spektralen Eigenschaften von herkömmlichem Gelände. Diese sind gekennzeichnet durch einen raschen Amplitudenanstieg mit anschließendem langsamen Abfall über eine größere Bandbreite.

Nach der vorbeschriebenen Falschzielunterdrückung in der Einrichtung 45 erfolgt die Bestimmung der kürzesten Entfernung durch Differenzieren des Spektrums und Aufschalten eines sogenannten "Leading edge trackers" 46. Bis zu diesem Zeitpunkt ist nämlich die gemessene Frequenz und damit auch direkt die Entfernung mit dem Fehler der Dopplerverschiebung beaufschlagt. Durch die Ansteuerung des VCO 11 mit der vorgeschlagenen Kennlinie (Fig. 2) läßt sich jedoch die Dopplerfrequenz ohne zusätzlichen Hardwareaufwand lediglich durch Mit- telung über einen steigenden (+ - Doppler) und einen fallenden (- + Dop- pler) Sägezahn in der Einheit 47 ausmitteln. Mehrere Höhenwerte werden dann durch einen sogenannten "αβ-Tracker - wie er beispielsweise aus "Principles of Modern Radar", GTRI 1984, bekannt ist - gemittelt. Gleichzeitig wird eine Prädiktion durchgeführt damit im Falle einer zu schwachen Bodenreflektion der zuletzt gemessene Höhenwert nicht abrupt abgebaut wird und zu ungewollten Manövern führt. Die errechnete Höhe regelt optional den "Abtastratenwandler" 50.

Die in Fig. 2 aufgezeigte gesendete "Waveform" weist mehrere Vorteile auf: so kann die Bestimmung der Dopplerfrequenz ohne Hardwareaufwand durchgeführt werden, weiterhin wird eine spektrale Verfälschung des Ergebnisses durch Zurücksetzen des Oszillators wie im Falle einer kontinuierlichen sägezahnförmigen Modulation bei analoger Signalverarbeitung vermieden werden.Die Detektierbarkeit wird wesentlich erschwert durch das Schalten in den Standby-mode während der Auswertphase (Selbsttest ohne Schaltermodulation des Empfängers). Aber auch die Dauer der Auswertephase läßt sich über einen Pseudocode einstellen - zusätzliche Verzögerung über einen in der Länge einstellbaren Wartezyklus - und verhindert oder zumindest erschwert damit die Detektierbarkeit.

Zum technischen Aufbau wäre noch anzuführen, daß die Antennen als Patch Antennen (Modul 170 x 80 m) in der E-Ebene längs der Flugrichtung ausgeführt sind. Der HF-Teil (50x80mm)ist auf die Antennenrückseite gelötet und über SMA-Anschlüsse mit der Sendeund Empfangsantenne verbunden. Er wird teils in Mikrostreifenleitertechnik - Dünnfilmtechnik auf Keramiksubstrat - teils in Coplanartechnik aufgebaut. Der gesamte Digitalteil mit Power Supply und Businterface sitzt auf einer einfachen Europakarte.

Bei analogen Höhenmessern ist eine Antennenentkopplung > 75 dB für den Einsatz bis 1500 m Höhe erforderlich. Diese wird durch den räumlichen Abstand von beispielsweise 0,5 m zwischen Sendeund Empfangsantenne erreicht. Bei der hier vorgeschlagenen Lösung reicht eine Antennen-Entkopplung von 50 dB aus, da über die digitale Signalverarbeitung ein Gewinn von 30 dB erzielt wird. Eine räumliche Trennung zwischen den beiden Antennen ist nicht mehr erforderlich.

Die erfindungsgemäßen Maßnahmen lassen sich problemlos auf das Xoder das Ku-Band umsetzen. Dazu wird per Bandpaßfilter eine Höhenharmonische des VCO ausgefiltert und entsprechend verstärkt, die vorgeschlagene Regelung über die Teilerkette 11a bleibt erhalten. Die übrigen Bauteile wie Schalter und Verstärker sind in MMIC-Technik bis 20 GHz verfügbar.

## Patentansprüche

1. Radarhöhenmesser der nach dem FMCW-Prinzip aufgebaut ist und im C-Band arbeitet, **dadurch gekennzeichnet**, daß der Radarhöhenmesser in MMIC-Technik mit vollständiger digitaler Auswertung und Modekontrolle auf gebaut ist, wobei dem von einem Mikrocomputer (10) in der Sendefrequenz sägezahnartig modulierten VCO (11) eine Tellerkette (11a) zur Messung der aktuellen Frequenz zugeordnet ist, deren Signal dem Zähler (12) des Mikrocomputers (10) zur Auswertung und Ansteuerung der Frequenzrampe des VCO (11) zugeleitet wird, dessen Ausgangssignal einem Leistungsverstärker (14) eingeht, dem ein variables Dämpfungsglied (13) vorgeschaltet und eine aus zwei MMIC-Schalter (15) und einem Dämpfungsglied (16) gebildete Selbsttesteinheit (30) nachgeschaltet ist und - vorzugsweise im Empfangszweig - ein Koppler (17) sowie eine Detektordiode (18) integriert ist, über die ständig ein Teil der empfangenen HF-Leistung gemessen wird und die von der Detektordiode abgegebene Gleichspannung in einem Komparator (19) mit einer vorgegebenen Schwellwertspannung verglichen wird, dessen Ausgangssignal bei Überschreitung dieser Schwellwertspannung dem Mikrocomputer (20) zur Unterbrechung (Interrupt) und Durchführung einer sog. "Warteschleife" zugeführt wird.

2. Höhenmesser nach Anspruch 1, **dadurch gekennzeichnet**, daß in dessen Empfangszweig ein LNA (low noise amplifier) (21) angeordnet ist, der zur Rauschzahlverbesserung einem Mischer (22) vorgeschaltet ist, dessen herabgemischtes Empfangssignal der Videoeinrichtung (23) zugeleitet wird.

3. Höhenmesser nach Anspruch 1 oder 2, **dadurch gekennzeichnet**, daß die Videoeinrichtung (23) mit einer Einrichtung zur Pegelaufbereitung, mit vom Mikroprozessor (10) gesteuerter AGC und einer Einrichtung zur Tiefpaßfilterung versehen ist.

4. Höhenmesser nach den Ansprüchen 1 bis 3, **dadurch gekennzeichnet**, daß der Mikrocomputer (10) zur digitalen Signalverarbeitung in CMOS-Technologie aufgebaut ist und über die Tabelle des Sägezahngenerators den Hub und die Modulationsfrequenz des Höhenmessers einstellt.

5. Höhenmesser nach den Ansprüchen 1 bis 4, **dadurch gekennzeichnet**, daß im Speicher des Mikrocomputers (10) die Spektralwerte eines Eichzykluses und diejenigen bekannnter Falschziele - wie Baumwipfel, Flugkörper etc - eingegeben sind und zur Falschzielunterdrückung herangezogen werden.

6. Höhenmesser nach den Ansprüchen 1 bis 5, **dadurch gekennzeichnet**, daß mittels einer Trackereinrichtung (46, 48) durch Differenzieren des Spektrums und Bestimmung des lokalen Maximums mittels "Sliding window"Technik und Vergleich mit der Standardabweichung die kürzeste Entfernung bestimmt wird.

7. Höhenmesser nach den Ansprüchen 1 bis 6, **dadurch gekennzeichnet**, daß zur Beseitigung des Fehlers der Dopplerverschiebung der VCO (11) mit einer bestimmten Sägezahn-Kennlinie (Fig. 2) angesteuert, ausgemittelt und die Höhe errechnet wird, die dann optional den Abtastratenwandler (50) regelt.

**Claims**

1. Radar altimeter which is built on the FMCW-principle and operates in the C-Band, **characterised in that** the radar altimeter is designed in the MMIC method with full digital evaluation and mode control, and that the VCO (11), which is in the transmit frequency sawtooth modulated by a microcomputer (10), is associated with a divider chain (11a) for measuring the actual frequency, the signal of which is fed to the counter (12) of the microcomputer (10) for evaluation and driving of the frequency ramp of the VCO (11), the output signal of which is fed into an output amplifier (14) which has at its input a variable attenuation element (13) and at its output a self-test unit (30) comprising two MMIC switches (15) and an attenuation element (16), and preferably integrated in the receive circuit a coupler (17) as well as a detector diode (18), by means of which a portion of received HF output is continuously measured and the direct voltage offered by the detector diode is compared in a comparator (19) to a specified threshold voltage the output signal of which is directed to the microcomputer (20) when this treshold voltage is exceeded for the purpose of interrupting and executing a so-called "holding loop".

2. Altimeter according to claim 1, **characterised in that** its receive section comprises a LNA (low-noise amplifier)(21) at the input of a mixer (22) so as to improve the noise figure, the down-mixed receive signal of which is fed to a video unit (23).

3. Altimeter according to claim 1 or 2, **characterised in that** the video unit (23) is fitted with a device for level processing, with a microprocessor (10) controlled AGC and a low-pass filter.

4. Altimeter according to claims 1 to 3, **characterised in that** the microcomputer (10) is designed in the CMOS-method for digital signal processing and that it sets the lift and the modulation frequency of the altimeter via the table of the sawtooth generator.

5. Altimeter according to claims 1 to 4, **characterised in that** into the memory of the microcomputer (10) are entered the spectral values of a calibration cycle and those of known error targets, such as tree tops, missiles, etc., and that these can be used for suppression of error targets.

6. Altimeter according to claims 1 to 5, **characterised in that** the shortest range is determined by means of a tracking device (46, 48) by differentiation of the spectrum and determination of a local maximum by means of the "sliding window" method and comparison to a standard deviation.

7. Altimeter according to claims 1 to 6, **characterised in that**, for the purpose of eliminating an error of Doppler displacement, the VCO (11) is driven by a specified sawtooth characteristics (Fig. 2), averaged and the altitude is calculated which then optionally controls the scanning-rate converter (50).

**Revendications**

1. Altimètre à radar reposant sur le principe FMCW et travaillant dans la bande C, caractérisé par le fait que l'altimètre à radar est construit selon la technique MMIC avec traitement et contrôle de mode entièrement numérique, une chaîne de diviseurs (11a) destinée à la mesure de la fréquence actuelle étant associée au VCO (11) dont la fréquence est modulée en dents de scie par un micro-ordinateur (10), chaîne dont le signal est envoyé au compteur (12) du micro-ordinateur (10) aux fins de traitement et de contrôle de la rampe de fréquence du VCO (11) dont le signal de sortie est appliqué à un amplificateur de puissance (14) avec placé en amont de celui-ci un élément atténuateur (13) variable et en aval de celui-ci une unité d'auto-contrôle (30) formée de deux commutateurs MMIC (15) et d'un élément atténuateur (16), un coupleur (17) et une diode détectrice (18) étant intégrés - de préférence dans la branche de réception -, éléments par l'intermédiaire desquels une partie de la puissance HF reçue est mesurée en permanence et la tension continue délivrée par la diode détectrice étant comparée à une tension de seuil prédéterminée dans un comparateur (19) dont le signal de sortie, en cas de dépassement de ladite tension de seuil, est transmis au micro-ordinateur (20) à des fins d'interruption (Interrupt) et d'exécution d'une boucle dite "d'attente".

2. Altimètre selon la revendication 1, caractérisé par le fait qu'un LNA (Low Noise Amplifier - amplificateur à faible bruit) (21) est disposé dans sa branche de réception, lequel amplificateur, à des fins d'amélioration du facteur de bruit, est branché en amont d'un mélangeur (22) dont le signal de réception abaissé est envoyé au dispositif vidéo (23).

3. Altimètre selon la revendication 1 ou 2, caractérisé par le fait que le dispositif vidéo (23) est pourvu d'un dispositif de préparation de niveau, d'un AGC piloté par le microprocesseur (10) et d'un dispositif de filtrage passe bas.

4. Altimètre selon les revendications 1 à 3, caractérisé par le fait que le micro-ordinateur (10) pour le traitement numérique du signal est réalisé selon la technique CMOS et règle l'amplitude et la fréquence de modulation de l'altimètre par l'intermédiaire de la table du générateur de signal en dent de scie.

5. Altimètre selon les revendications 1 à 4, caractérisé par le fait que les valeurs de spectre d'un cycle d'étalonnage et celles de fausses cibles connues - telles que cimes d'arbres - sont stockées dans la mémoire du micro-ordinateur (10) et sont utilisées pour éliminer les fausses cibles.

6. Altimètre selon les revendications 1 à 5, caractérisé par le fait qu'au moyen d'un dispositif de traquage (46, 48) on détermine la distance la plus courte par différenciation du spectre et calcul du maximum local selon la technique de la "fenêtre mobile" et comparaison avec l'écart standard.

7. Altimètre selon les revendications 1 à 6, caractérisé par le fait que pour éliminer l'erreur due au décalage Doppler on commande le VCO (11) suivant une courbe caractéristique en dent de scie prédéterminée (figure 2) on calcule la valeur moyenne et on calcule la hauteur qui règle ensuite le convertisseur de fréquence de palpage (50).

FIG. 1

FIG. 2

Frequenz [GHz]

sägezahnförmige Modulation mit fallender Flanke ±Doppler Frequenz

sägezahnförmige Modulation mit steigender Flanke ±Doppler Frequenz

4.35
4.30
4.25

0 ←————————— 1 Zyklus —————————→ 50   Zeit [msec]

| A | B | C | — | A | B | C | D |   →

nächster Zyklus

**A**
- Auslesen DAC zur sägezahnförmigen Modulation des VCO
- Einlesen der Abtastwerte

**B**
- Berechnung der Entfernung und AGC-Verstärkung
- Messung der Sendefrequenz
- Schalten des Altimeter in Stand by mode

**C**
- Einlesen des Zählerstandes Sendefrequenz und Korrektur der Startadresse der VCO Rampe
- Nachregelung der AGC-Verstärkung

**D**
- $\alpha/\beta$ Tracker, Glättung und Entfernungskorrektur (Doppler)
- Datentransfer zum BUS

EP 0 359 911 B1

FIG. 3

EP 0 359 911 B1